Europäisches Patentamt

European Patent Office

Office européen des brevets

(19)

(11) **EP 1 375 604 A1**

(12) **EUROPEAN PATENT APPLICATION**

(43) Date of publication:
**02.01.2004 Bulletin 2004/01**

(51) Int Cl.[7]: **C09D 5/36**

(21) Application number: **03014615.3**

(22) Date of filing: **26.06.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **27.06.2002 JP 2002188364
03.07.2002 JP 2002194211
17.07.2002 JP 2002207766
17.01.2003 JP 2003010140**

(71) Applicant: **NISSHIN STEEL CO., LTD.
Chiyoda-ku Tokyo 100-8366 (JP)**

(72) Inventors:
• **Sugita, Shuichi
Ichikawa-shi, Chiba, 272-0011 (JP)**

• **Matsubara, Kazumi
Ichikawa-shi, Chiba, 272-0011 (JP)**
• **Okubo, Kenichi
Ichikawa-shi, Chiba, 272-0011 (JP)**
• **Mori, Koji
Ichikawa-shi, Chiba, 272-0011 (JP)**
• **Homma, Nobuyuki Ichikawa Works,
Ichikawa-shi, Chiba, 272-0011 (JP)**

(74) Representative: **Müller-Boré & Partner
Patentanwälte
Grafinger Strasse 2
81671 München (DE)**

(54) **Transparent coated metal sheet containing effect pigments coated with metal oxide**

(57)    A clear coated metal sheet has a clear-paint film 1, which disperses an interference-coloring pigment 4 therein, formed on a base metal sheet 3 directly or through an under clear coat 6. The pigment 4 comprises transparent or translucent inorganic flakes, e.g. mica, glass, alumina or silica, coated with one or more metal oxide layers, e.g. $TiO_2$, $SiO_2$, $ZrO_2$, $Fe_2O_3$, $SnO_2$, $Fe_3O_4$, $Cr_2O_3$, ZnO or $Al_2O_3$. Incident light $L_{in}$, which enters in the clear-paint film 1, is reflected on the pigment 4 and a surface of the base metal sheet 3. A colored surface with metallic luster is observed due to interference of light on the pigment 4. Since a color tone is stable without thickness effect of the clear-paint film 1, the clear sheet is useful as decorative members.

# FIG.2

**Description**

The present invention relates to a color clear coated metal sheet, which has a colored clear-paint film without any damage on a metallic luster of a base metal.

Clear metal sheets have been used as decorative facing members for electric home appliances, OA devices and so on. The clear coated metal sheet gives a unique impression, which can not be expected by a conventional color painted metal sheet, due to its lustrous external appearance.

A clear coated metal sheet is manufactured by applying clear-paint mixed with a coloring pigment to a surface of a base metal sheet, and then drying and baking the clear paint. An organic pigment is ordinarily used as such a coloring pigment, since dyestuff is often discolored during baking and difficult to stabilize a color quality of a paint film.

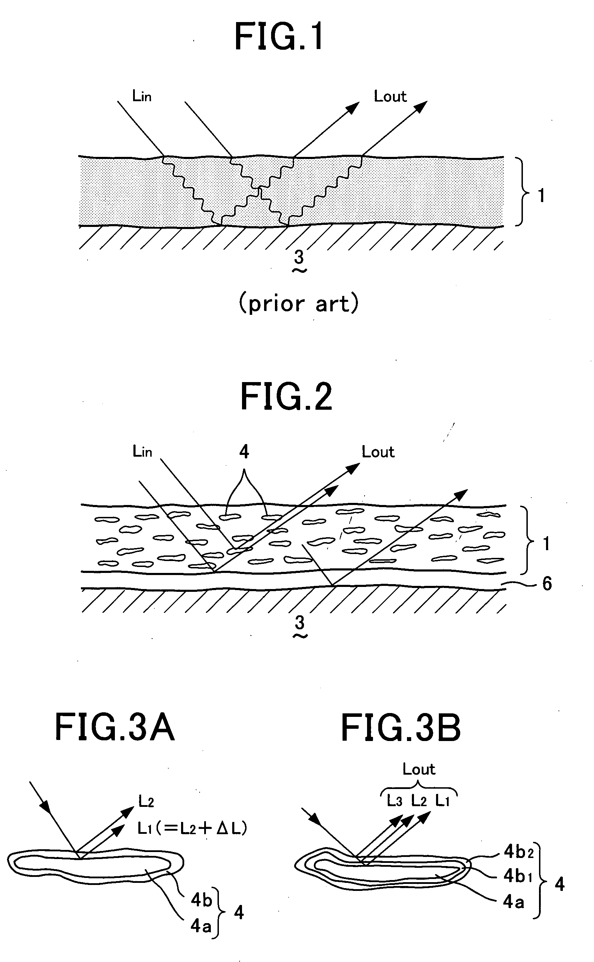

A clear-paint film produces a color tone in response to a coloring organic pigment dispersed in the paint film, as follows: After light $L_{in}$ enters in a paint film 1, an organic pigment 2 absorbs a specified-wavelength part of the light $L_{in}$. The remaining light $L_{in}$ is reflected on a surface of a base metal 3 and dispatched as reflected light $L_{out,}$ as shown in Fig. 1. The reflected light $L_{out}$ produces a color tone due to absorption of the specified-wavelength part.

Luminous energy, which is absorbed in the organic pigment 2 during travel of the light $L_{in}$ through the paint film 1, is varied in response to thickness of the paint film. That is, a thicker paint film absorbs bigger luminous energy, and a thinner paint film absorbs less luminous energy. Variation of the absorbed luminous energy means dependency of a color tone on thickness of the paint film. In fact, the color tone delicately changes even if thickness of the paint film is slightly deviated. Change of the color tone is unfavorably impressed as irregular color, in such the case when many clear coated metal sheets are assembled together to an objective shape.

Although a painted metal sheet is colored by the organic pigment, metallic luster of the base metal 3 is often reduced, and an external appearance of the clear coated metal sheet gives dark cold impression with decrease of a value-L. Decrease of the value-L can be inhibited by matting treatment, but a matted surface unfavorably reduces transparency of a clear-paint film and vividness of a color tone.

The present invention aims at provision of a clear coated metal sheet with a stable color tone, by dispersing interference-coloring pigment in a clear-paint film to produce a color tone by interference with light. Film defects may be made unremarkable by additional dispersion of matting grains in the clear-paint film.

The present invention proposes a clear coated metal sheet, which has the basic structure that a lustrous surface of a base metal sheet is coated with a clear-paint film, which disperses transparent or translucent interference-coloring pigment therein.

The interference-coloring pigment comprises transparent or translucent inorganic flakes coated with at least a transparent or translucent metal oxide. The inorganic substrate may be one or more of mica flake, glass flake, alumina flake and silica flake. The metal oxide may be one or more of $TiO_2$, $SiO_2$, $ZrO_2$, $Fe_2O_3$, $SnO_2$, $Fe_3O_4$, $Cr_2O_3$, ZnO and $Al_2O_3$. The inorganic flakes may be coated with two or more metal oxide layers. A color of the interference-coloring pigment is controlled by thickness of the metal oxide layer.

The clear-paint film may be multi-layered. In this case, each layer has a refractive index different from the other and an interference-coloring pigment, which produces different interference color, dispersed therein. The refractive index of each layer may be controlled by selection of a base resin. Dispersion of the interference-coloring pigment in the multi-layered clear-paint film prevents a color tone from whitening and improves vividness of an external appearance.

Colorless transparent matting grains may be dispersed together with the interference-coloring pigment in the clear-paint film to make film defects unremarkable. As a result, a lustrous surface of a base metal is impressed, as far as the clear-paint film is adjusted to 20-80 % by 60-degree specular gloss.

The matting grains may be one or more of beads such as silica, glass, nylon, urea resin, acrylic resin, fluorocarbon polymer, polyethylene and polypropylene resin. Matting grains of 1-10 $\mu$m in size are preferable to roughen a surface of the clear-paint film with a proper degree. The wording of "colorless transparency" in this specification is defined by color difference $\Delta E$ less than 2 between a clear-paint film, which is of 10 $\mu$m in thickness without dispersion of matting grains formed on a base metal, and a clear-paint film of the same thickness with dispersion of matting grains. A color tone of each clear-paint film is measured according to JIS 28741.

An under clear coat may be formed between a base metal and a clear-paint film, which disperses interference-coloring pigment therein. The under clear coat improves adhesiveness of the clear-paint film and also vividness of a color tone.

The under clear coat is preferably adjusted to brightness of 25-60 calculated as a value-L by dispersion of translucent pigment. The translucent pigment is one or more of carbon black, graphite flakes, metal oxide flakes and metal sulfide flakes with proper light transmissivity. Light transmissivity of the translucent pigment is controlled within a range of 15-90% by thickness of the flakes and a ratio of the flakes in clear-paint.

A top clear coat may be also formed on the clear-paint film, which disperses interference-coloring pigment therein. The top clear coat favorably rearranges the interference-coloring pigment dispersed in the clear-paint film, so as to stabilize a color tone and properties of the paint film. The top clear coat does not disperse the interference-coloring pigment therein, and its thickness is preferably controlled to 2-15 µm with the provision that a thickness ratio of the top clear coat to the clear-paint film is maintained within a range of 0.4-1.5.

Fig. 1 is a schematic view illustrating a cross section of a conventional clear coated metal sheet, which has a colored clear-paint film dispersing an organic pigment therein.

Fig. 2 is a schematic view illustrating a cross section of an inventive clear coated metal sheet, which has a clear-paint film dispersing an interference-coloring pigment therein.

Fig. 3A is a sectional view of an interference-coloring pigment coated with a single metal oxide layer.

Fig. 3B is a sectional view of another interference-coloring pigment coated with two metal oxide layers.

Fig. 4 is a schematic view illustrating a clear-paint film, which disperses both of an interference-coloring pigment and matting grains therein.

Fig. 5 is a schematic view illustrating a cross section of a clear coated metal sheet, which has an under clear coat, a clear-paint film and a top clear coat formed on a base metal sheet.

Fig. 6 is a schematic view illustrating a cross section of a double-layered clear-paint film dispersing interference-coloring pigment therein.

Fig. 7 is a schematic view illustrating a clear coated metal sheet, which has an under clear coat interposed between a base metal sheet and a clear-paint film dispersing an interference-coloring pigment therein.

Fig. 8 is a graph for explaining brightness of inventive clear coated metal sheets compared with conventional color sheets.

Fig. 9 is a diagram for explaining a color tone of an inventive clear coated metal sheet, which is variable in corresponding to a colorimetric angle.

Fig. 10 is a diagram for explaining effects of a multi-layered structure of a clear-paint film and dispersion of interference-coloring pigments on a color tone of clear coated metal sheets.

Fig. 11 is a graph showing effects of thickness of a top clear coat on a color tone of a clear coated metal sheet.

Fig. 12 is a graph showing effects of thickness of a top clear coat on surface roughness of a clear coated metal sheet.

Fig. 13 is a graph showing effects of thickness of a top clear coat on a value D/I.

A clear coated metal sheet according to the present invention has a clear-paint film 1, which disperses an interference-coloring pigment 4 therein, formed on a surface of a base metal sheet 3, as shown in Fig. 2. The interference-coloring pigment 4 comprises transparent or translucent inorganic flakes 4a coated with a transparent metal oxide layer 4b, as shown in Fig. 3A. Light $L_{in,}$ which enters in the clear-paint film 1, passes between the adjacent pigment flakes 4 or through the pigment flakes 4 and arrives at the surface of the base metal sheet 3.

The light $L_{in}$ is reflected on the surface of the base metal sheet 3 and dispatched outside. Some of the light $L_{in}$ is also reflected on surfaces of the pigment flakes 4. Reflection of the light $L_{in}$ on the pigment flakes 4 occurs on both surfaces of the flaky substrate 4a and the metal oxide layer 4b. A lump of the reflected lights from the base metal sheet 3, from the flaky substrate 4a and from the metal oxide layer 4b is substantially equal to an energy of the incident light $L_{in,}$ so that brightness of the clear coated metal sheet is not reduced by the clear-paint film 1.

There is an optical path difference ΔL between reflected light $L_1$ from the flaky substrate 4a and reflected light L2 from the metal oxide layer 4b. The value ΔL, which is calculated as 2d·sinθ (wherein d is thickness of the metal oxide layer 4b and θ is a glancing incidence), causes interference of light. As a result, the clear coated metal sheet is observed with a hue interference-colored in correspondence to the optical path difference ΔL.

A hue of the interference-color is controlled by thickness of the metal oxide layer 4b. For instance, in the case of a clear-paint film 1 which disperses $TiO_2$-coated mica flakes therein, the hue changes from silver through gold, red, copper, lilac and blue to green, as the $TiO_2$ layer becomes thicker.

An interference-color may be tinged with a variety of hues by lamination of various metal oxides on the flaky substrate 4a, as shown in Fig. 3B. An interference-coloring pigment, which produces brilliant gold with pearly luster, is offered by overlaying $Fe_2O_3$ as a secondary layer $4b_2$ on $TiO_2$ as the primary layer $4b_1$. An interference-coloring pigment, which produces brilliant green with pearly luster, is offered by overlaying $CoTiO_3$ on $TiO_2$. An interference-coloring pigment, which produces brilliant gold with pearly luster, is offered by overlaying $Fe_2O_3$ on $TiO_2$. Various metal oxides other than $TiO_2$ are of course useful as the primary layer $4b_1$.

The interference-coloring pigment 4, which has flakes 4a coated with two or more metal oxide layers $4b_1$, $4b_2$ each different in refractive index from the other, complicates transmission, reflection and refraction of the light $L_{in}$ in the clear-paint film 1. Reflected light $L_{out}$ is a merger of light $L_1$ from the flaky substrate 4a, light $L_2$ from the primary metal oxide layer $4b_1$ and light $L_3$ from the secondary metal oxide layer $4b_2$ as well as light from a surface of the base metal sheet 3, so as to produce a color tone with a varied hue.

An interference-colored clear-paint film 1 does not reduce brightness (evaluated by a value-L), since an energy of the reflected light $L_{out}$ is substantially equal to the incident light $L_{in}$. All of light $L_{out}$ reflected on the base metal sheet 3 and the interference-coloring pigment 4 is observed, so that a color tone is remarkably stable without thickness effect of the clear-paint film 1 even between manufacturing lots.

Inclusion of the reflected light $L_1$-$L_3$ from the interference-coloring pigment 4 in the reflected light from the base metal sheet 3 softens a cold metallic impression of stainless steel or aluminum as the base metal sheet 3 to a mild tone without reduction of glossiness.

A color tone, which appears on the clear coated metal sheet, is variable in response to glancing incidence due to interference of light. The color tone is impressive at glancing incidence near a high light angle for specular reflection, but becomes achromatic at glancing incidence farther from the high light angle. Such variation of the color tone is advantageous, especially when the clear coated metal sheet is used as a rounded or curved member.

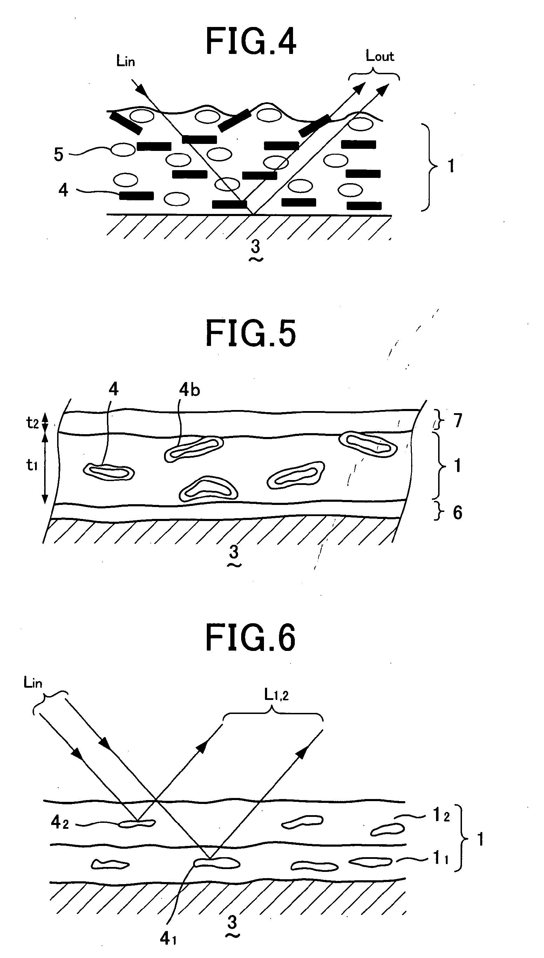

Although dispersion of the interference-coloring pigment 4 in the clear-paint film 1 bestows the clear coated metal sheet with an impressive color tone, film defects are sometimes emphasized by dispersion of the pigment 4. The inventors suppose the film defects are derived from standing-up of the pigment flakes, blisters and foreign particles in the clear-paint film 1. Emphasis of the film defects is suppressed by additional dispersion of matting grains 5 in the clear-paint film 1 (Fig. 4) or by overlaying a top clear coat 7 on the clear-paint layer (Fig. 5).

A colorless transparent pigment as the matting grains 5 is dispersed in the clear-paint film 1, so as to make the film defects unremarkable. The effect of the matting grains 5 on the film defects will be explained as follows:

The matting grain 5 slightly refracts incident light $L_{in}$ but does not promote diffused reflection of the light $L_{in}$ due to colorless transparency. Some matting grains 5, which are distributed near a surface of the clear-paint film 1, roughen the surface to a state appropriate for proper diffused reflection, as shown in Fig. 4. Diffused reflection of the light $L_{in}$ on the roughened surface reduces a difference in a quantity of light between the reflected right $L_{out}$ and light diffusively reflected from the film defects. Consequently, the film defects are scarcely observed by naked eyes.

A top clear coat 7 is overlaid on a clear-paint film 1, as shown in Fig. 5. Defects of the clear-paint film 1 are shielded by the top clear coat 7, so that an external appearance of the clear coated metal sheet is not damaged by the film defects. The top clear coat 7 also re-arranges the interference-coloring pigment 4 in parallel with a surface of the clear-paint film 1, so that light reflection on a surface of each pigment flake 4 becomes uniform and produces a brilliant interference-color without dulling.

A quantity of reflected light $L_{out}$ is not reduced but kept similar to incident light $L_{in,}$ since the incident light $L_{in}$ is not substantially absorbed in the top clear paint 7. As a result, a color tone is observed on the clear coated metal sheet without decrease of brightness.

The clear-paint film 1 may be formed as a multi-layered film, as shown in Fig. 6. Interference-coloring pigments $4_1$ and $4_2$, which are dispersed in a primary clear-paint film $1_1$ and a secondary clear-paint film $1_2$, respectively, produce interference-color with a hue different from the other. Dispersion of the pigments $4_1$ and $4_2$ in the multi-layered clear-paint film 1 assures appearance of a brilliant color tone without whitening. The effect of the pigments $4_1$ and $4_2$ on appearance of a brilliant color tone will be explained as follows:

Incident light $L_{in,}$ which enters in the multi-layered clear-paint film 1, is refracted at the secondary clear-paint film $1_1$ and further refracted at the primary clear paint film $1_2.$ Some of the incident light $L_{in}$ is reflected on metal oxide layers and flaky substrates of the pigments $4_1$ and $4_2$ to produce interfered light $L_{1,2}$ as a part of reflected light $L_{out}.$ A color tone of the interfered light $L_{1,2}$ is weakened or intensified during travelling though the clear-paint films $1_1$ and $1_2.$ Change of the color tone together with the multi-stepped refraction probably causes appearance of the brilliant color without whitening.

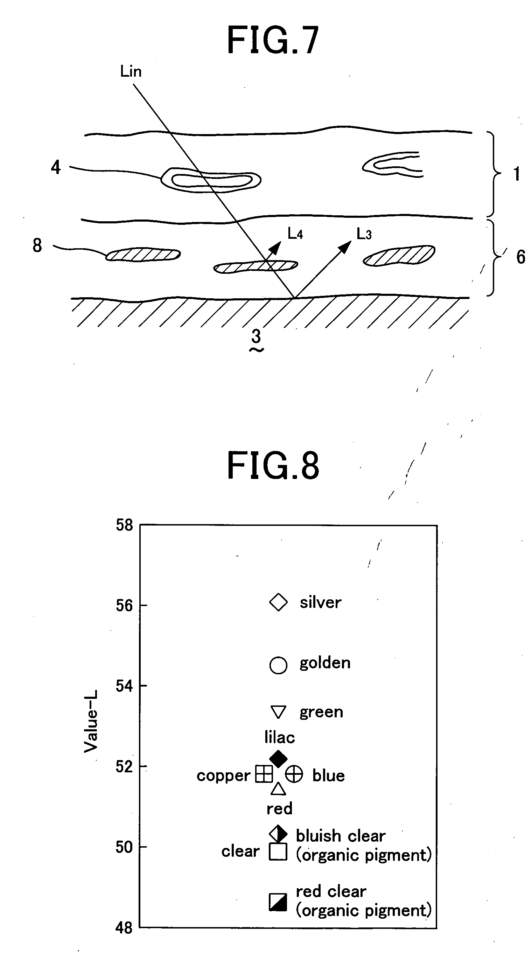

An under clear coat 6 of 1-10 $\mu$m in thickness may be formed between the base metal sheet 3 and the clear-paint film 1, as shown in Fig. 7. The under clear coat 6 is effective for adhesiveness of the clear-paint film 1 to a base metal sheet 3. A translucent pigment 8 may be dispersed in the under clear coat 6 in order to moderate brightness of the clear coated metal sheet. Moderation of brightness is attained by dispersion of pigment flakes 8 at a relatively small ratio.

A base metal sheet 3 is selected from stainless steel, metal-coated steel, aluminum, aluminum alloys, copper, copper alloys, magnesium and magnesium alloys, since an objective product will have a lustrous metallic surface. The base metal sheet 3 is subjected to proper pre-treatment, e.g. degreasing, pickling, phosphorizing, chromizing and other Cr-free chemical processing in prior to formation of a clear-paint film 1.

There are no restrictions on a kind of clear-paint for formation of the clear-paint film 1, but transparent organic resin selected from acryl, polyester, urethane, polyolefin, fluorocarbon, epoxy, vinyl acetate and chloroprene is preferably used for the purpose. The organic resin may be mixed with crepe pattern-forming resin and/or inorganic polymer (s). Additives such as corrosion-preventing pigment, coloring pigment and dyestuff may be added to the organic resin at a ratio so as not to reduce transparency of the clear-paint film 1.

Accounting use of a clear coated metal sheet which will be formed to a product shape, it is preferable that the clear-paint film 1 is excellent in adhesiveness to a base metal sheet 3 and flexibility by itself. Anti-scratching property is sometimes necessary on the contrary to flexibility. A kind of resin for the clear-paint film 1 is determined in response to requisitions for specified use. The clear-paint film 1 can be controlled to proper hardness by addition of a curing agent such as melamine or isocyanate.

An interference-coloring pigment 4 as an additive to clear-paint is prepared by coating inorganic flakes 4a, e. g. mica, glass flakes, alumina flakes or silica flakes, with a metal oxide layer 4b. The metal oxide layer 4b is formed on the flakes 4a by a wet process, CVD or sputtering. The metal oxide layer 4b may be a single or multi-layered structure.

As the inorganic flakes 4a has a bigger aspect ratio (i.e. a ratio of a maximum diameter to thickness), the flakes 4a are more distributed in the clear-paint film 1 with an orientation in parallel to a surface of the base metal sheet 3. Such orientation of the flakes 4a raises probability of reflection of incident light $L_{in}$ on surfaces of the pigment flakes 4. For instance, pigment flakes 4, which have an aspect ratio of 60 or more, are mostly distributed in the clear-paint film 1 with an orientation in parallel to the surface of the base metal sheet 3. Such orientative distribution of the pigment flakes 4 intensifies interference of light $L_1$, $L_2$ reflected on the flaky substrate 4a and the metal oxide layer 4b (shown in Fig. 3A). Consequently, interference-color appears with high visibility, and the clear coated metal sheet also gives brilliant impression.

The interference-coloring pigment representatively comprises mica flakes coated with $TiO_2$. The $TiO_2$ layer can be formed on the mica flakes by various wet processes. For instance, mica flakes are suspended in a dilute titanic acid solution and held as such at 70-100 °C so as to deposit titania hydrate as a hydrolysis product of titanic acid on mica flakes. The titania hydrate is converted to a $TiO_2$ layer by heating the mica flakes at 700-1000 °C. The $TiO_2$ layer is controlled to proper thickness by processing conditions, e.g. a concentration of titanic acid or titanate, a temperature of the suspension and a time period for holding mica flakes in contact with titanic acid or titanate.

Pigment flakes coated with a metal oxide layer are also prepared by sputtering. In this case, such flakes 4a as mica or glass are inserted in a rotary drum and sputtered in a reactive atmosphere using a Ti target so as to deposit $TiO_2$ on the flakes 4a.

The flaky substrate 4 may be coated with two or more metal oxide layers $4b_1$, $4b_2$ (as shown in Fig. 3B). The secondary metal oxide layer 4b2 may be formed on the primary metal oxide layer $4b_1$ in the same way or a different way but changing coating material. For instance, a $Fe_2O_3$ layer is overlaid on a $TiO_2$ layer formed on a flaky substrate 4 as follows:

$TiO_2$-coated pigment flakes are suspended in an aqueous solution at 70-100 °C, and an iron salt solution is added to the suspension so as to deposit iron hydroxide on the $TiO_2$-coated pigment flakes. Iron hydroxide is converted to a $Fe_2O_3$ layer by drying the processed pigment flakes at 150-200 °C. The $Fe_2O_3$ layer is controlled to proper thickness by processing conditions such as a concentration of the iron salt solution, a temperature of the suspension and a processing time.

The interference-coloring pigment 4 can be added as such to clear-paint composition, but is preferably treated with an inorganic reagent, e.g. chromate, phosphate, alumina, zirconia or cerium. An organic reagent such as silane-coupling agent, titanate-coupling agent or an organic monomer may be used for processing the pigment 4. The treated pigment 4 exhibits excellent dispersibility in clear-paint composition and also improves adhesiveness of a clear-paint film 1 to an under or top clear coat 6, 7 (shown in Fig. 5).

Clear-paint composition, which disperses an interference-coloring pigment 4 therein, is applied to a base metal sheet 3 and baked as a clear-paint film 1 to the base metal sheet 3. A baking temperature is determined within a range of 200-400°C in response to a kind of the paint composition and an amount of the paint composition applied to the base metal sheet 3. A period of 30-120 seconds is enough for baking the paint composition.

A clear coated metal sheet manufactured in this way has an external appearance with a mild color tone, since metallic luster of a base metal sheet 3 is moderated by a clear-paint film 1 without inorganic dark cold impression. The clear-paint film 1 is preferably adjusted to thickness of 5-20 μm in order to stabilize the color tone.

As an aspect ratio of the interference-coloring pigment 4 becomes bigger, the pigment flakes 4 are distributed in a clear-paint film 1 with higher orientation in parallel to a surface of a base metal sheet 3. However, some pigment flakes 4 unfavorably project on the clear-paint film 1. When incident light $L_{in}$ is directly reflected on projecting parts of the pigment flakes 4, interference-color is dulled.

Dulling of interference-color is inhibited by overlaying a top clear coat 7 on the clear-paint film 1 (shown in Fig. 5). The top clear coat 7 is preferably formed using the same or similar paint composition for the clear-paint film 1. Acryl, polyester, urethane, polyolefin, fluorocarbon, epoxy, vinyl acetate or chloroprene, is useful as the transparent organic resin for the purpose. Other resin such as shrinkage pattern-forming resin or inorganic polymer may be additionally mixed in the transparent organic resin. Conventional rust-inhibiting pigments, coloring pigments and/or dyestuff are optionally added to the paint composition at a ratio so as not to reduce transparency of the top clear coat 7.

The top clear coat 7 is formed on a clear-paint film 1, by applying clear-paint composition to the clear-paint film 1 and baking the clear-paint composition at 200-300 °C for 30-120 seconds.

Thickness $t_2$ of the top clear coat 7 is preferably controlled within a range of 2-15 μm with the provision that a ratio $t_2/t_1$ ($t_1$ is thickness of the clear-paint film 1) is 0.4-1.5. Values of $t_2 \geq 2$ μm and $t_2/t_1 \geq 0.4$ are appropriate for covering projecting parts of the pigment flakes 4 with the top clear coat 7, controlling distribution of the pigment flakes 4 in the clear-paint film 1, and smoothing a clear coated metal sheet. However, an excessively thick top coat 7 (i.e. $t_2>15$ µm and $t_2/t_1>1.5$) worsens smoothness of the clear coated metal sheet and dulls its external appearance.

When the same or similar paint composition is used for formation of a clear-paint film 1 and a top clear coat 7, the paint composition is baked under the same conditions. Due to the same baking conditions, the clear-paint film 1 is softened during forming the top clear, coat 7, and pigment flakes 4 are re-arranged in the clear-paint film 1 with orientation in parallel to a surface of a base metal sheet 3. The re-arrangement means an increase of a surface area of the pigment flakes 4 effective for interference of light. Consequently, a clear coated metal sheet has an excellent external appearance without dulling due to intensified production of interference-color. Use of the same or similar paint composition is also advantageous for improvement affinity of the top clear coat 7 with the clear-paint film 1.

In prior to formation of a clear-paint film 1, an under clear coat 6 may be formed on a surface of a base metal sheet 3 in order to improve adhesiveness of the clear-paint film 1 to the base metal sheet 3. There are no restrictions on a kind of paint composition for the under clear coat 6, as far as the paint composition does not contain the interference-coloring pigment 4. Conventional rust-inhibiting pigments, coloring pigments and/or dyestuff are optionally added to the paint composition. For instance, organic resin, e.g. epoxy, epoxy-denatured polyester, urethane or urethane-denatured epoxy resin, is applied to a pretreated surface of the base metal sheet 3 for formation of the under clear coat 6.

A translucent pigments 8 may be dispersed in an under clear coat 6, in order to moderate brightness of a clear coated metal sheet. The translucent pigment 8 is selected from carbon black, graphite flakes, metal oxide flakes and metal sulfide flakes. Although graphite is commonly regarded as light-absorbing material, flakes of 2 µm (preferably 1 µm) or less in thickness formed from graphite are translucent. Flakes of metal oxide (e.g. CrO, $Co_2O_3$, $Co_3O_4$, CuO, MnO, $Mn_2O_3$, $Mn_3O_4$, SnO, $MoO_3$ or $MoO_4$) or metal sulfide (e.g. CrS, $Cr_2S_3$, CoS, CoS2, $Co_2S_3$, CuS, $MnS_2$, $MoS_2$, SnS, CuS, $Cu_2S$ or FeS) are also translucent suitable for the purpose. The translucent pigment 8 is preferably pretreated so as to improve its dispersibility in paint composition for the under clear coat 6.

Dispersion of the translucent pigment flakes 8 efficiently controls brightness (a value-L) of a clear coated metal sheet at a smaller ratio, as compared with conventional granular coloring pigment, without reducing luster of a base metal sheet 3. Moreover, change of a color tone is suppressed regardless thickness deviation of an under clear coat 6.

The translucent pigment 8 preferably has light transmissivity of 15-90 % with respect to light of 500 nm within a visible wavelength region. The light transmissivity is calculated by the formula of:

$$E=-\log T=\log(I_0/I)$$

wherein

E is absorbance,
T is transmissivity,
Io is intensity of incident light, and
I is intensity of transmitted light

Light transmissivity of 15-90 % is appropriate for moderating brightness of a clear coated metal sheet by dispersion of the translucent pigment 8. Excess transmissivity above 90 % reduces the effect of the pigment 8 on moderation of brightness, but insufficient transmissivity less than 15 % means an excess concealing power of the under clear coat 6.

A translucent pigment 8 is added to paint composition for an under clear coat 6 at such the ratio that brightness (a value-L) of the clear coated metal sheet will be maintained within a range of 25-60. The clear coated metal sheet has a favorable external appearance with a clear color tone due to properly intensified interference of light $L_1$, $L_2$ from interference-coloring pigment 4, as far as the value-L is adjusted to 25-60.

An under clear coat 6 is formed on a surface of a base metal sheet 3, by applying paint composition, which disperses translucent pigment 8 therein, to the base metal sheet 3, and then baking the paint composition 30-120 seconds at 200-400 °C. Thickness of the under clear coat 6 is preferably controlled to 5-20 µm, so as to maintain proper brightness without reducing metallic luster of the base metal sheet 3.

EXAMPLE

Example 1

A SUS430 stainless steel sheet of 0.4 mm in thickness was used as a base metal sheet 3. The stainless steel sheet was pickled with a 2%-HCl solution, processed with an acid and then chromized at an adhesion ratio of 20 mg/ $m^2$ calculated as Cr.

Mica flakes of 30 $\mu$m in average size with an aspect ratio of 150 were coated with a $TiO_2$ layer of 50-140 nm in thickness, as follows: Mica flakes 100g were suspended in 2 liters of water and kept at 75°C. After a $TiCl_4$ liquor was added together with a gelatin solution to the suspension, the suspension was adjusted to pH 6.0 by NaOH. After the suspension was stirred 15 minutes, mica flakes were separated from the suspension by filtration and then sufficiently washed with water so as to completely remove salts. Thereafter, the mica flakes were dried at 100 °C and baked at 850 °C in a nitrogen atmosphere.

The $TiO_2$-coated mica flakes as interference-coloring pigment 4 were dispersed in polyester resin (offered as PM5000 by Nippon Paint Co., Ltd.) at a ratio of 4% to prepare clear-paint composition.

The clear-paint composition was applied to the stainless steel sheet, dried and baked to the stainless steel sheet by 60 seconds heat-treatment at 230 °C. A produced clear-paint film 1 was of 10 $\mu$m in thickness.

Each clear coated steel sheet was sampled for measurement of brightness (a value-L) according to a color difference noting method regulated under JIS Z8737 using a spectrum colorimeter (CM-3700d offered by Minolta Co., Ltd.). Results shown in Fig. 8 prove that a high value-L was detected on every clear coated steel sheet, which had an inventive clear-paint film 1. A dark cold metallic impression derived from stainless steel itself was moderated by the clear-paint film 1, and the clear coated steel sheet had an external appearance with a mild hue.

On the other hand, any clear coated steel sheet, which had a clear-paint film colored by dispersion of conventional coloring pigment, had a low value-L and the external appearance that a dark cold metallic impression was rather intensified.

A color tone of a clear coated steel sheet was varied in correspondence with thickness of a $TiO_2$ layer on mica flakes: silver by thickness of 50nm, golden by 70 nm, copper by 90 nm, lilac by 100 nm, blue by 120 nm and green by 140 nm. In case of the conventionally colored clear coated steel sheets, proper coloring pigment was necessarily selected from several organic pigments in response to an objective color, e.g. phthalocyanine blue or quinacridone red.

Furthermore, clear-paint composition, which dispersed interference-coloring pigment at a ratio of 4% therein, was applied to a base steel sheet 3 and baked 60 seconds at 230 °C at highest so as to form a clear-paint film 1. In this case, thickness of the clear-paint film 1 was varied as shown in Table 1 by controlling an amount of the clear-paint composition applied to the base steel sheet 3.

Each clear coated steel sheet was sampled for measurement of brightness (a value-L). A color difference $\Delta E$ was calculated from measured values-L, a and b, in comparison with a color difference $\Delta E$ of a clear coated steel sheet coated with a clear-paint film of 10 $\mu$m in thickness. Calculation results are shown in Table 1. It is noted from Table 1 that a color difference $\Delta E$ was suppressed within a range of 1.0 regardless thickness deviation of the clear-paint film. Suppression of the color difference $\Delta E$ proves that the inventive clear coated steel sheet had an external appearance with a stable color tone.

On the other hand, a color difference $\Delta E$ exceeded 1.0, when a clear-paint film on the comparative painted steel sheet was thicker by 1 $\mu$m only than the standard thickness of 10 $\mu$m. The big color difference $\Delta E$ means that a color tone of the comparative painted steel sheet was varied to great extent in correspondence with thickness deviation of the clear-paint film.

Table 1: Thickness Effects of Clear-Paint Films on Color Difference ΔE

| thickness (μm) | Inventive Examples | | | | | | | Comparative Examples | |
|---|---|---|---|---|---|---|---|---|---|
| | silver | golden | red | copper | lilac | blue | green | red | blue |
| 7 | 0.8 | 0.6 | 0.6 | 0.5 | 0.4 | 0.5 | 0.6 | 2.8 | 2.0 |
| 8 | 0.4 | 0.4 | 0.3 | 0.4 | 0.3 | 0.3 | 0.3 | 1.9 | 1.5 |
| 9 | 0.2 | 0.2 | 0.2 | 0.2 | 0.1 | 0.1 | 0.2 | 1.2 | 1.1 |
| 10 | 0 | 0 | 0 | 0 | 0 | 0 | 0 | 0 | 0 |
| 11 | 0.4 | 0.4 | 0.1 | 0.1 | 0.1 | 0.2 | 0.2 | 1.5 | 1.3 |
| 12 | 0.7 | 0.6 | 0.2 | 0.2 | 0.3 | 0.4 | 0.5 | 2.4 | 2.1 |
| 13 | 1.0 | 0.9 | 0.3 | 0.5 | 0.7 | 0.8 | 0.8 | 3.2 | 2.8 |

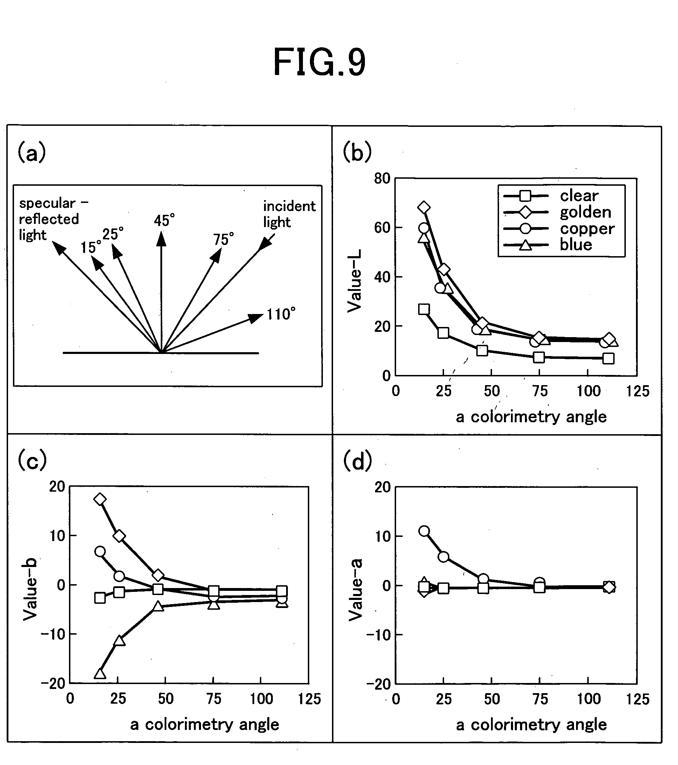

Furthermore, a color tone of a clear coated steel sheet was measured at measurement angles deviated by 15, 25, 45, 75 and 110 degrees (shown as (a) in Fig. 9) from specular-reflected light with respect to 45-degree incident light, using a multi-angle spectrum colorimeter (X-Rite MA68II offered by X-Rite Corp.). Measurement results (shown as (b) in Fig. 9) prove that a color tone is somewhat whitened with a high value-L at any measuring angle. That is, a dark cold metallic impression derived from stainless steel was moderated by the clear-paint film.

A hue of interference-color, which was originated in the interference-coloring pigment, was vivid at a high light angle but weak at a shade angle (shown as (c) and (d) in Fig. 9). Intensity change of the interference-color in correspondence with a measuring angle can be advantageously used for a product shape. For instance, when a clear coated steel sheet is formed to a curved shape, a high-class fantastic impression with variation of brightness (a value-V) and a hue (values-a and -b) is given to a single product.

It is understood from the above-mentioned experimental results that a clear coated steel sheet is bestowed with a high-class color tone by formation of a clear-paint film, which disperses $TiO_2$-coated mica flakes therein. The clear-paint film does not eliminate metallic luster of stainless steel itself but moderate the metallic luster to a level which does not cause a dark cold inorganic impression.

The same external appearance was produced, even when $SiO_2$-coated mica flakes, $TiO_2$-coated glass flakes or $SiO_2$-coated glass flakes were dispersed in a clear-paint film instead of $TiO_2$-coated mica flakes, or when an Al-coated steel sheet, an aluminum sheet or a copper sheet was used as a base metal sheet instead of a stainless steel sheet.

Example 2

Interference-coloring pigment 4, which has two layers $4b_1$ and $4b_2$ (shown in Fig. 3B) of metal oxides different from each other in refractive index, was used in Example 2. The pigment 4 was prepared as follows:

After a $TiO_2$ layer as a primary layer $4b_1$ was formed on mica flakes, 100 g the mica flakes were suspended in 2 liters of water and kept at 75 °C. A 5%-$FeCl_3$ solution was added to the suspension. The suspension was adjusted to pH 4.0 and then stirred 15 minutes at 75 °C. Thereafter, solid fractions were centrifuged from a liquid phase and sufficiently washed so as to completely remove salts. The washed solids were dried 10 hours at 200 °C. A product had a $Fe_2O_3$ layer as a secondary layer $4b_2$ formed on the $TiO_2$ layer. The other metal oxide layers were also formed on the $TiO_2$ layer in the same way.

The pigment 4 was mixed in polyester resin to prepare clear-paint composition. A clear-paint film 1 of 10 μm in thickness was formed by applying and baking the clear-paint composition to a base steel sheet 3 in the same way as Example 1.

Each clear coated steel sheet was sampled for measurement of a color tone. It is noted from results shown in Table 2 that steel sheets were bestowed with colors varied in response to materialistic combination of the layers $4b_1$ and $4b_2$. The produced color tone was stable regardless thickness deviation of the clear-paint film without reduction of brightness.

Table 2:

| Effects of Mterialistic Combination of Oxide Layers on Color | | | | | |
|---|---|---|---|---|---|
| Primary Layer | material | $TiO_2$ | $TiO_2$ | $TiO_2$ | $TiO_2$ |
| | thickness (nm) | 50 | 80 | 120 | 30 |
| Secondary Layer | material | $Fe_2O_3$ | $CoTiO_3$ | $Cr_2O_3$ | $FeTiO_3$ |
| | thickness (nm) | 15 | 25 | 25 | 25 |
| Color | | golden | bluish green | silver gray | silver blue |

Furthermore, thickness effects of a clear-paint film, which dispersed interference-coloring pigment 4 (mica flakes coated with $TiO_2$ and $Fe_2O_3$ layers), on a color difference ΔE were researched in the same way as Example 1. Results are shown in Table 3.

It is understood from Table 3 that a color difference ΔE was controlled within a range of 1.0 regardless thickness variation of a clear-paint film interference-colored with the $TiO_2$, $Fe_2O_3$-coated pigment 4. That is, a manufactured color sheet had an external appearance with a stable color tone.

Table 3:

| Thickness Effect Of Clear-Paint Films on Color Difference ΔE | | | | | | | |
|---|---|---|---|---|---|---|---|
| Thickness (μm) of clear-pain films | 7 | 8 | 9 | 10 | 11 | 12 | 13 |
| Color difference ΔE | 0.9 | 0.6 | 0.4 | 0.0 | 0.5 | 0.8 | 1.0 |

Example 3

Effect of matting grains on an external appearance of a clear coated steel sheet was researched in Example 3. The matting grains are shown in Table 4. Transparency of the matting grains are values calculated as follows:

Stainless steel sheets were individually coated with a clear-paint film, which did not disperse matting grains therein, and with another clear-paint film, which dispersed matting grains at a ratio of 10 mass % therein. Each clear-paint film was adjusted to thickness of 10 μm. Color tones of the matting grains-free clear-paint film and the matting grains-dispersed clear-paint film were measured according to JIS Z8741. A color difference ΔE between the clear-paint films was calculated from the measurement results and regarded as transparency of the matting grains.

Table 4: Matting Grains used in Example 3

| Test No. | material | grain size (μm) | ΔE |
|---|---|---|---|
| 1 | silica | 2 | 0.4 |
| 2 | silica | 5 | 0.5 |
| 3 | | | |
| 4 | | | |
| 5 | | | |
| 6 | nylon | 10 | 1.2 |
| 7 | | | |
| 8 | absence of matting grains | | |
| 9 | nylon | 20 | 2.5 |
| 10 | silica | 0.5 | 0.2 |

Clear-paint composition was prepared by dispersing the matting grains together with 4% of the same $TiO_2$-coated mica flakes as in Example 1 in polyester resin. The clear-paint composition was applied to a pre-treated stainless steel sheet of 0.4 mm in thickness and heated 60 second at 230 °C. A produced clear-paint film was of 10 μm in thickness.

Each clear coated steel sheet was sampled for measurement of brightness (a value-L). Measurement results were compared with a conventional clear coated steel sheet colored with an organic coloring pigment. It was recognized that brightness of the inventive clear coated steel sheet was extremely bigger than the conventional clear coated steel sheet and that a dark cold metallic appearance of stainless steel itself was moderated to a mild color tone.

The inventors have further researched effects of matting grains 5 on film defects originated in standing of interference-coloring pigment, blisters and foreign matters. In this research, matting grains 5 of various sizes were dispersed together with 4% of an interference-coloring pigment 4 in clear paint composition at various ratios, and clear-paint films 1 were formed on a stainless steel sheet by applying and baking each clear-paint composition under the same conditions.

Each clear coated steel sheet was sampled for evaluation of an external appearance and for detection of film defects.

60-degree specular gloss of a clear-paint film was measured by a digital luster meter (GM-3D offered by Murakami Sikisai Technical Laboratory Ltd.). A profile of the clear-paint film along a vertical direction was measured by a surface profile detector (Dektak 3030 offered by Ulvac Corp.), a center line of the profile was determined, a standard deviation from the center line was calculated as surface roughness of the clear-paint film. The measurement results indicated reduction of glossiness and increase of surface roughness as increase of an amount of matting grains 5 dispersed in a clear-paint film 1.

Film defects were evaluated by the following test. At first, a number of defects at a 100 mm square surface area of a clear-paint film, which did not disperse matting grains therein, was counted by naked-eye's observation. Counting was repeated three times at different surface areas. An average number was calculated from the counted numbers. Defects in a clear-paint film, which dispersed matting grains therein, were also counted by the same way. The average number $N_1$ of defects in the matting grains-dispersed clear-paint film was compared with the average number No of defects in the matting grains-free clear-paint film. A clear-paint film was regarded as good at $N_1 < N_0/2$ or as inferior at $N_1 \geq N_0/2$.

Results of the above-mentioned researches are shown in Table 5.

It is understood that any inventive clear coated steel sheet, which had matting grains 5 dispersed in a clear-paint film 1, had an external appearance with 60-degree specular gloss of 20-80 % and that film defects are made unremarkable without degradation of a unique color tone derived from the interference-coloring pigment 4. The effect of the matting grains 5 is typically noted in the case where matting grains 5 of 1-10 μm in size were dispersed in a relatively thick clear-paint film 1.

On the other hand, 60-degree specular gloss of a clear-paint film 1 (Test No. 8), which did not disperse matting grains 5 therein, was very high, and defects were apparently observed on the clear-paint film 1 due to diffused reflection of incident light $L_{in}$ at projecting parts of the pigment 4, blisters and foreign matters. Film defects were also observed on a clear-paint film 1, wherein 60-degree specular gloss was out of a proper range regardless dispersion of matting grains 5.

Table 5:

| Effects of Matting Grains on Glossiness and Defects of Clear-Paint Films | | | | | |
|---|---|---|---|---|---|
| Test No. | Matting Grains | | | 60-degree specular gloss | a number of film defects |
| | material | size (μm) | ratio (mass %) | | |
| 1 | silica | 2 | 20 | 74 | 3 |
| 2 | silica | 5 | 5 | 78 | 3 |
| 3 | silica | 5 | 10 | 61 | 2 |
| 4 | silica | 5 | 15 | 39 | 0 |
| 5 | silica | 5 | 20 | 25 | 0 |
| 6 | nylon | 10 | 5 | 46 | 0 |
| 7 | nylon | 10 | 10 | 25 | 0 |
| ∞ | without matting grains | | | 150 | 9 [1] |
| 9 | nylon | 20 | 10 | 15 | 15 [2] |
| 10 | silica | 0.5 | 20 | 85 | 8 [3] |

Note[1] : Abnormal particles were observed.

Note[2] : Matting grains were observed as defects, and interference color was not apparently observed.

Note[3] : The same abnormal particles as those in a matting grains-free clear-paint film were observed, and film defects were not made unremarkable.

Example 4

Effects of a double-layered structure (shown in Fig. 6) of a clear-paint film on an external appearance and a color tone of a clear coated steel sheet were investigated in Example 4.

A hairline-finished SUS430 stainless steel sheet of 0.4 mm in thickness was used as a base metal sheet 3, and processed by the same way as Example 1.

Clear-paint composition for a primary layer $1_1$ was prepared by dispersing 2 mass % of interference-coloring pigment $4_1$ in epoxy resin with refractive index of about 1.4. Clear-paint composition for a secondary layer $1_2$ was prepared by dispersing 2 mass % of interference-coloring pigment $4_2$ in polyester resin with refractive index of about 1.6. Mica flakes of 30 μm in average size with an aspect ratio of 150 were coated with $TiO_2$ layers of 50-140 nm in thickness and conditioned to various colors, as shown in Table 6, for each pigment $4_1$, $4_2$.

### Table 6: Pigments Dispersed in Clear-Paint Film with Interference-Color

| Sample No. | Interference-Color of Pigment | | |
|---|---|---|---|
| | in primary layer | in secondary layer | |
| 1 | blue | copper | Inventive Example |
| 2 | | blue | Comparative Examples |
| 3 | — | copper | |
| 4 | | blue, copper | |
| 5 | red | green | Inventive Example |
| 6 | | red | Comparative Examples |
| 7 | — | green | |
| 8 | | red, green | |
| 9 | golden | blue | Inventive Example |
| 10 | | golden | Comparative Examples |
| 11 | — | blue | |
| 12 | | golden, blue | |

Primary clear-paint composition was applied to a base steel sheet 3 and baked 50 seconds at 210 °C to form a primary clear-paint layer $1_1$ of 10 μm in thickness. Secondary clear-paint composition was then applied onto the primary layer $1_1$ and baked 60 seconds at 230 °C to form a secondary clear-paint layer $1_2$ of 10 μm in thickness.

Other clear coated steel sheets, which had a single-layered clear-paint film of 20 μm in thickness, were prepared by applying clear-paint composition, which dispersed one or both of the pigments $4_1$ and $4_2$ therein, to base steel sheets 3.

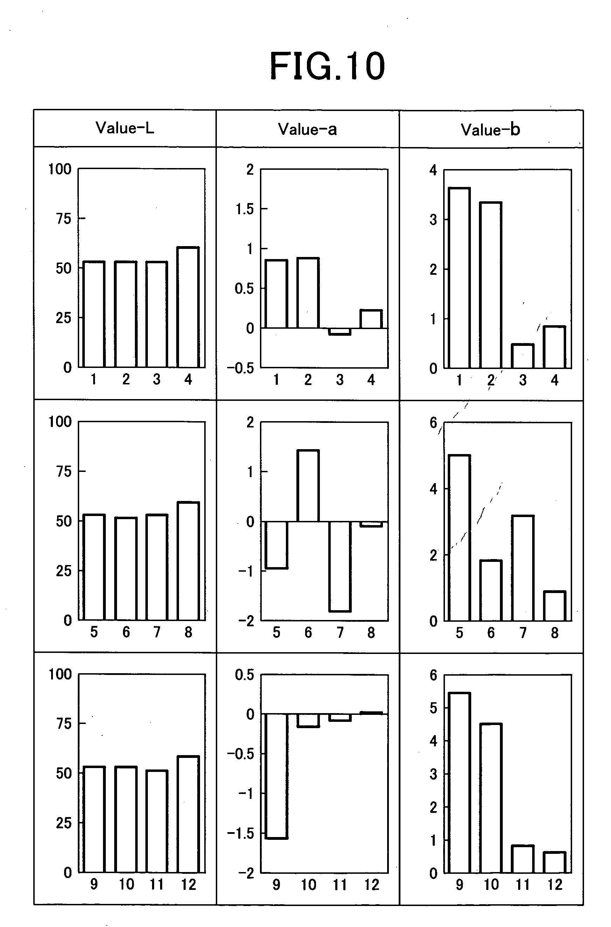

Each clear coated steel sheet was sampled for measurement of a color tone according to JIS Z8737. Results are shown in Fig. 10, wherein figures allotted to lateral axes represent Sample Nos. of clear coated steel sheets. Sample Nos. 1, 5 and 9 are the clear coated steel sheets with double-layered clear-paint films. Sample Nos. 2, 6 and 10 are the clear coated steel sheets with single-layered clear-paint films, which dispersed pigment $4_1$ therein. Sample Nos. 3, 7 and 11 are the clear coated steel sheets with single-layered clear-paint films, which dispersed pigment $4_2$

therein. Sample Nos. 4, 8 and 12 are the clear coated steel sheets with single-layered clear-paint films, which dispersed both of pigments $4_1$ and $4_2$ therein.

Results in Fig. 10 prove that each of the clear coated steel sheets Nos. 1, 5 and 9 had an external appearance with a clear color tone without whitening. Interference-color of each pigment $4_1$ and $4_2$ was still observed in the external appearance. Any of the clear coated steel sheets Nos. 4, 8 and 12 had an external appearance with slight decrease of values-L, -a and -b due to merging of interference-colors from the pigments $4_1$ and $4_2$.

Example 5

Effects of an under clear coat 6 (shown in Fig. 7) on an external appearance and properties of a clear coated steel sheet were investigated in

Clear-paint composition for an under clear coat 6 was prepared by dispersing translucent pigment 8 in polyester resin (PM5000 offered by Nippon Paint Co., Ltd.). Flakes A to D shown in Table 7 were used as the translucent pigment 8. Light transmissivity of each pigment 8 was calculated according to the formula of $E=-\log T=\log(I_0/I)$, by irradiating a clear-paint film of 5 μm in thickness, to which the translucent pigment 8 was added at a certain ratio, with visible light of 500 nm in wavelength and measuring an energy of light transmitted through the clear-paint film.

The clear-paint composition was applied to a pre-treated stainless steel sheet and baked 60 seconds at 230 °C to form an under clear coat 6 of 5 μm in thickness. A value-L of each under clear coat A to D was different from the other, as shown in Table 7, in response to the material of the pigment 8.

Table 7: Translucent Pigment Dispersed in Under Clear Coat with Brightness

| | Material | Translucent Pigment Dispersed in Under Clear Coat | | | | | brightness (value-L) of clear coated steel sheets |
| | | average thickness (μm) | average size (μm) | aspect ratio | light transmissivity (%) | ratio to paint (mass %) | |
|---|---|---|---|---|---|---|---|
| A | $MoS_2$ | 0.2 | 12 | 60 | 56 | 3 | 43 |
| B | graphite | 0.2 | 15 | 75 | 17 | 10 | 25 |
| C | mica flakes coated with metal oxide | 0.2 | 25 | 125 | 60 | 13 | 45 |
| D | mica flakes coated with metal oxide | 0.2 | 25 | 125 | 87 | 5 | 59 |

A clear-paint film 1 of 10 μm in thickness was formed on the under clear coat 8, using polyester paint which dispersed an interference-coloring pigment 4 therein. The pigment 4 was a mica flake, which was coated with a $TiO_2$

layer of 90 nm in thickness to produce copper color.

Each clear coated steel sheet was sampled for investigating effect of the under clear coat 6 on visibility of a color tone. The visibility was evaluated by psychometric chroma coordinates. Other clear coated steel sheets, which had clear-paint films 1 directly formed thereon without under clear coats 6, were also provided for measuring hue and visibility of a color tone.

Results are shown in Table 8. It is understood that a value-a of interference-color originated in the pigment 4 was raised to 1.5-3.5 times bigger by interpose of the under clear coat 6 between the base steel sheet 3 and the clear-paint film 1. On the other hand, clear coated steel sheets, which had the clear-paint films 1 directly formed thereon without the under clear coats 6, had a relatively small value-a without substantial increase of visibility.

Table 8: Effects of Under Clear Coats on Color Tone and Visibility of Clear-Paint Films

| Sample No. | Under Clear Coat | | ratio of interference-coloring pigment (mass %) | Color Tone of Clear-Paint Films | | | |
|---|---|---|---|---|---|---|---|
| | translucent pigment | value-L | | value-L | value-a | value-b | psychometric chroma coordinates (visibility) |
| 1 | A | 43 | 7 | 46 | 7 | 3 | 7.6 |
| 2 | B | 25 | 7 | 30 | 6 | 2 | 6.3 |
| 3 | C | 45 | 7 | 49 | 7 | 4 | 8.1 |
| 4 | D | 59 | 7 | 64 | 3 | 4 | 5.0 |
| 5 | Absent | — | 7 | 62 | 2 | 4 | 4.5 |
| 6 | Absent | — | 8 | 63 | 2 | 4 | 4.4 |
| 7 | Absent | — | 9 | 64 | 3 | 4 | 5.0 |
| 8 | Absent | — | 10 | 65 | 3 | 5 | 5.8 |

Example 6

Brightness of an under clear coat 6 was varied by dispersing MoS2 flakes of different thickness therein, for investigating effects of the under clear coat 6 on visibility of a color tone and an external appearance of a clear coated steel sheet.

An under clear coat 6 of 5 μm in thickness was formed from clear-paint composition, which dispersed 3 % of MoS2 flakes therein. Brightness (a value-L) of the under clear coat 6 was varied in correspondence with thickness of the $MoS_2$ flakes, as shown in Table 9.

Table 9:

| Relationship Between Thickness of $MoS_2$ Flakes and Brightness of Under Clear Coats | | | | | | |
|---|---|---|---|---|---|---|
| thickness (μm) of $MoS_2$ flakes | 0.1 | 0.5 | 1.0 | 2.0 | 3.0 | 5.0 |
| value-L | 56 | 40 | 36 | 26 | 17 | 15 |

A clear-paint film 1, which dispersed 7% of interference-coloring pigment 4 therein, was further formed on each under clear coat 6, by the same way as Example 5.

Each clear coated steel sheet was sampled for measuring hue and visibility of a color tone. Its external appearance was observed by naked eyes and evaluated as follows: The mark ○ represents clear coated steel sheets with vivid metallic appearance. The mark Δ represents clear coated steel sheets, whose metallic appearance was somewhat observed. The mark × represents clear coated steel sheets, whose metallic appearance was hardly observed.

Results shown in Table 10 prove that a color tone of the clear-paint film 1 was improved in visibility by dispersion of $MoS_2$ flakes in the under clear coat 6 between the base steel sheet 3 and the clear-paint film 1. Especially, visibility of a color tone of the clear-paint film 1 with an under clear coat, which dispersed $MoS_2$ flakes with thickness corresponding to light transmissivity of 15-90 % therein, was superior to a clear-paint film No. 5 free from $MoS_2$ flakes. However, dispersion of extremely thick $MoS_2$ flakes unfavorably reduced light transmission to a level difficult to observe a metallic appearance, as noted in Nos. 6 and 7.

Table 10:

| Effects of Under Clear Coats on Color Tone and Appearance | | | | |
|---|---|---|---|---|
| Sample No. | Under Clear Coat | | psychometric chroma coordinates (visibility of color tone) | external appearance |
| | thickness (μm) of $MoS_2$ flakes | value-L | | |
| 1 | 0.1 | 56 | 5.2 | ○ |
| 2 | 0.5 | 40 | 7.4 | ○ |
| 3 | 1.0 | 36 | 8.4 | ○ |
| 4 | 2.0 | 28 | 10.3 | ○~Δ |
| 5 | absent | 62 | 4.5 | ○ |
| 6 | 3.0 | 17 | 11.7 | × |
| 7 | 5.0 | 15 | 12.3 | × |

Example 7

Effects of a top clear coat 7 (shown in Fig. 5) on hue and external appearance of a clear coated steel sheet were investigated in Example 7.

Top clear-paint composition was prepared from polyester resin (PM5000 offered by Nippon Paint Co., Ltd.) without dispersion of interference-coloring pigment.

A pre-treated stainless steel sheet of 0.4 mm in thickness was coated with a clear-paint film 1, which dispersed $TiO_2$-coated mica flakes as an interference-coloring pigment 4 therein, and then coated with a top clear coat 7 by applying the top clear-paint composition and baking it 60 seconds at 230 °C. The clear-paint film 1 and the top clear coat 7 were adjusted to thickness of 10 μm and 5 μm, respectively.

Each clear coated steel sheet was sampled for measurement of values-L, -a and -b. Its surface roughness (Ra) was also measured by a surface profile analyzer (SAS-2010 offered by Meishin Kohki Co., Ltd.). Measurement results of the values-L, -a and -b and Ra were compared with those values of clear coated steel sheets without the top clear coats, as shown in Table 11.

Table 11: Effects of Top Clear Coats on Color Tone of Clear-Painted Steel Sheets

| thickness (nm) of metal oxide layers on mica flakes | Top Clear Coat | Color Tone | | | | | | surface roughness Ra (μm) |
|---|---|---|---|---|---|---|---|---|
| | | value-L | deviation (ΔL) | value-a | deviation (Δa) | value-b | deviation (Δb) | |
| 50 (silver) | Present | 55.6 | 1.0 | -0.5 | -0.2 | 2.6 | 0.3 | 0.17 |
| | Absent | 54.1 | — | -0.3 | — | 2.3 | — | 1.42 |
| 70 (blue) | Present | 50.6 | -0.5 | -2.1 | -0.9 | 1.6 | 0.2 | 0.14 |
| | Absent | 51.1 | — | -1.2 | — | 1.4 | — | 1.44 |
| 90 (green) | Present | 51.1 | -0.5 | -2.4 | -0.3 | 4.8 | -0.8 | 0.16 |
| | Absent | 51.6 | — | -2.1 | — | 5.6 | — | 1.36 |
| 120 (golden) | Present | 51.5 | -0.3 | -0.4 | -0.1 | 7.9 | 1.1 | 0.13 |
| | Absent | 51.8 | — | -0.3 | — | 6.8 | — | 1.32 |
| 140 (red) | Present | 51.9 | -0.4 | 3.5 | 0.9 | 3.2 | 0.1 | 0.16 |
| | Absent | 52.3 | — | 2.6 | — | 3.1 | — | 1.39 |

EP 1 375 604 A1

Results in Table 11 prove that formation of the top clear coat 7 reduces any value-L of color tones except silver and raises values-a and -b representing hues of the color tones.

Reduction of the value-L means prevention of the clear-paint film 1 from whitening without dulling of the color tone. The effect of the top clear coat 7 on reduction of the value-L is probably caused by re-orientation of the interference-coloring pigment 4 in the clear-paint film 1 along a surface of the base steel sheet 3 during formation of the top clear coat 7 so as to correct optical path difference for interference of light in the clear-paint film 1.

Increases of values-a and -b suggest suppression of diffused reflection of light by the top clear coat 7. The effect of the top clear coat 7 on suppression of diffused reflection is also supported by increase of a value-L of a silver tone, since the value-L of the silver tone corresponds to hues of the other colors.

It is noted from results in Table 11 that surface roughness (Ra) of clear coated steel sheets was reduced by formation of the top clear coat 7. Reduction of the surface roughness proves that projecting parts of pigment flakes 4 on the clear-paint film 1 were covered with the top clear coat 7. Consequently, a clear interference-color is produced without substantial diffusion loss of incident light $L_{in}$ and reflected light $L_{out}$.

Example 8

Thickness effects of a top clear coat 7 on visibility of an interference-color are researched in Example 8.

Several clear coated steel sheets were manufactured by the same way as Example 7, but top clear coats 7 were variously changed in thickness.

Each clear coated steel sheet was sampled for measurement of values-L, -a, -b and Ra. An image visibility (a value D/I) of the clear coated steel sheet was measured by an image visibility meter (DGM-30 offered by Murakami Shikisai Technical Laboratory, Ltd.). A leveling degree of the top clear coat 7 was also measured.

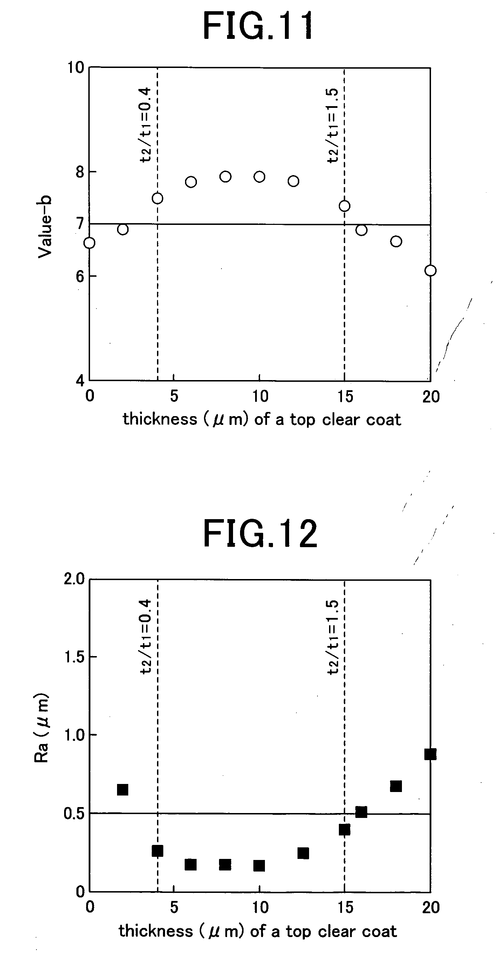

Fig. 11 shows a relationship of a value-b in relation with thickness of the top clear coat 7. It is understood that deviation of the value-b was controlled within a range of 1.0 regardless thickness variation of the top clear coat 7, as far as thickness $t_2$ of the top clear coat 7 was controlled in relation with thickness $t_1$ of the clear-paint film 1 at $t_2/t_1$=0.4-1.5. The small deviation of the value-b means a stable color tone.

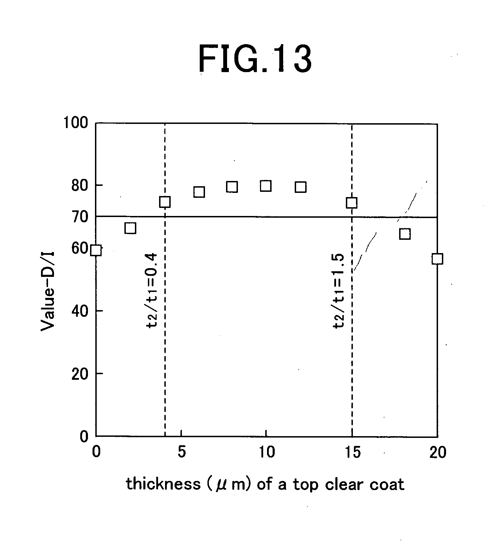

Stabilization of the color tone is also supported by measurement results of a value Ra (shown in Fig. 12) and a value D/I (shown in Fig. 13). That is, the values Ra and D/I were big at a thickness ratio $t_2/t_1$ of 0.4-1.5 regardless thickness $t_2$ of the top clear coat 7. The bigger values Ra and D/I means a smooth surface of the top clear coat 7 appropriate for normal incidence and reflection of light.

A clear coated metal sheet according to the present invention as above-mentioned has a clear-paint film, which disperses an interference-coloring pigment therein, formed on a base metal sheet. The pigment, which comprises transparent or translucent flakes coated with one or more metal oxide layers, produce interference-color due to optical path difference between lights reflected on the flakes and the metal oxide layer(s). A cold metallic appearance of the base metal sheet is moderated by the interference color without reduction of brightness.

Film defects are made unremarkable by co-dispersion of transparent matting grains in the clear-paint film or by overlaying a top clear coat on the pigment-dispersed clear-paint film. When an under clear coat is interposed between the base metal sheet and the pigment-dispersed clear-paint film, an interference-color is not diluted so much by light reflected on a surface of the base metal sheet, so that a colored decorative appearance is observed with high visibility.

The newly proposed color sheet is useful as high-class decorative members for electric home appliances, OA devices, kitchen goods and so on.

**Claims**

1. A clear coated metal sheet, which comprises

   a base metal sheet having a metallic surface, and
   a clear-paint film formed on said surface directly or through an under clear coat,

   wherein transparent or translucent inorganic flakes coated with one or more transparent or translucent metal oxide layers are dispersed as an interference-coloring pigment in said clear paint film.

2. The clear coated metal sheet defined by Claim 1, wherein the metal oxide is one or more of $TiO_2$, $SiO_2$, $ZrO_2$, $Fe_2O_3$, $SnO_2$, $Fe_3O_4$, $Cr_2O_3$, ZnO and $Al_2O_3$.

3. The clear coated metal sheet defined by Claim 1 or 2, wherein the inorganic flakes are one or more of mica, glass, alumina flakes and silica.

**4.** The clear coated metal sheet defined by any one of Claims 1 to 3, wherein the clear paint film additionally disperses colorless transparent matting grains therein.

**5.** The clear coated metal sheet defined by Claim 4, wherein the matting grains are one or more of silica, glass and synthetic resin beads.

**6.** The clear coated metal sheet defined by any one of Claims 1 to 5, wherein the under clear coat optionally disperses a translucent flaky pigment therein.

**7.** The clear coated metal sheet defined by Claim 6, wherein the flaky pigment is one or more of graphite, metal oxides and metal sulfides.

**8.** The clear coated metal sheet defined by any one of Claims 1 to 7, wherein the clear paint film is further coated with a top clear coat, wnich does not disperse any interference-coloring pigment therein.

**9.** The clear coated metal sheet defined by Claim 8, wherein thickness t2 of the top clear coat is controlled in relation with thickness $t_1$ of the clear-paint film with the provision of $t_2/t_1$=0.4-1.5.

# FIG.1

(prior art)

# FIG.2

# FIG.3A

# FIG.3B

# FIG.4

# FIG.5

# FIG.6

# FIG.7

# FIG.8

# FIG.9

# FIG.10

# FIG.11

# FIG.12

# FIG.13

thickness ( $\mu$ m) of a top clear coat

# EP 1 375 604 A1

**European Patent Office**

## EUROPEAN SEARCH REPORT

Application Number

EP 03 01 4615

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int.Cl.7) |
| X | US 4 297 405 A (KASAHARA NOBUYOSHI ET AL) 27 October 1981 (1981-10-27) * column 2, line 39 - line 68 * * column 4, line 16 - line 35 * --- | 1-3,6 | C09D5/36 |
| X | WO 99 31023 A (MERCK PATENT GMBH ;PFAFF GERHARD (DE); WEITZEL JOACHIM (DE); HECHL) 24 June 1999 (1999-06-24) * page 4, line 29 - page 5, line 4 * * page 5, line 32 - line 34 * * page 6, line 17 - line 19 * | 1-3 | |
| A | * example 1 * --- | 4,5 | |
| A | EP 0 388 932 A (BASF CORP) 26 September 1990 (1990-09-26) * page 2, line 46 - line 55 * * page 3, line 18 - line 23 * * page 5, line 1 - line 5 * * page 6, line 38 - line 50 * * page 7, line 10 - line 15 * * page 15, line 43 - line 47 * * page 16, line 5 - line 21 * ----- | 1-3,6-9 | **TECHNICAL FIELDS SEARCHED** (Int.Cl.7) C09D C09C |

The present search report has been drawn up for all claims

| Place of search | Date of completion of the search | Examiner |
|---|---|---|
| THE HAGUE | 17 September 2003 | Matthijssen, J-J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

29

## ANNEX TO THE EUROPEAN SEARCH REPORT
## ON EUROPEAN PATENT APPLICATION NO.

EP 03 01 4615

This annex lists the patent family members relating to the patent documents cited in the above-mentioned European search report.
The members are as contained in the European Patent Office EDP file on
The European Patent Office is in no way liable for these particulars which are merely given for the purpose of information.

17-09-2003

| Patent document cited in search report | | Publication date | Patent family member(s) | | Publication date |
|---|---|---|---|---|---|
| US 4297405 | A | 27-10-1981 | JP | 54094586 A | 26-07-1979 |
| | | | JP | 54094587 A | 26-07-1979 |
| | | | JP | 54094588 A | 26-07-1979 |
| | | | CA | 1137363 A1 | 14-12-1982 |
| | | | DE | 2900530 A1 | 12-07-1979 |
| | | | FR | 2414068 A1 | 03-08-1979 |
| | | | GB | 2046280 A ,B | 12-11-1980 |
| | | | IT | 1110666 B | 23-12-1985 |
| WO 9931023 | A | 24-06-1999 | AT | 239676 T | 15-05-2003 |
| | | | BR | 9813654 A | 03-10-2000 |
| | | | CN | 1282308 T | 31-01-2001 |
| | | | DE | 19856171 A1 | 24-06-1999 |
| | | | DE | 19881907 D2 | 15-06-2000 |
| | | | DE | 59808307 D1 | 12-06-2003 |
| | | | WO | 9931023 A1 | 24-06-1999 |
| | | | EP | 1044174 A1 | 18-10-2000 |
| | | | JP | 2002508497 T | 19-03-2002 |
| | | | US | 6602340 B1 | 05-08-2003 |
| EP 0388932 | A | 26-09-1990 | AU | 5137890 A | 27-09-1990 |
| | | | BR | 9001351 A | 02-04-1991 |
| | | | CA | 2010818 A1 | 22-09-1990 |
| | | | EP | 0388932 A2 | 26-09-1990 |
| | | | JP | 3028275 A | 06-02-1991 |

EPO FORM P0459

For more details about this annex : see Official Journal of the European Patent Office, No. 12/82